# FASCICULE DE BREVET EUROPEEN

(11) **EP 3 089 443 B1**
(45) Date de publication et mention de la délivrance du brevet: **28.06.2017**
(21) Numéro de dépôt: 16165598.0
(22) Date de dépôt: 15.04.2016
(51) Int. Cl.: H04N 5/355, H04N 5/3745

(54) **CAPTEUR D'IMAGES À CODAGE TEMPOREL**
BILDSENSOR MIT ZEITBASIERTER KODIERUNG
IMAGE SENSOR WITH TIME-BASED CODING

(30) Priorité: 28.04.2015 FR 1553799
(43) Date de publication de la demande: 02.11.2016
(73) Titulaire: COMMISSARIAT À L'ÉNERGIE ATOMIQUE ET AUX ÉNERGIES ALTERNATIVES, 75015 Paris (FR)
(72) Inventeur: DEHAENE, David, 91120 PALAISEAU (FR)
(74) Mandataire: Thibon, Laurent

(56) Documents cités:
- POSCH C ET AL: "An asynchronous time-based image sensor", CIRCUITS AND SYSTEMS, 2008. ISCAS 2008. IEEE INTERNATIONAL SYMPOSIUM ON, IEEE, PISCATAWAY, NJ, USA, 18 mai 2008 (2008-05-18), pages 2130-2133, XP031392426, ISBN: 978-1-4244-1683-7
- XIAOCHUAN GUO ET AL: "A Time-to-First-Spike CMOS Image Sensor", IEEE SENSORS JOURNAL, IEEE SERVICE CENTER, NEW YORK, NY, US, vol. 7, no. 8, 1 août 2007 (2007-08-01), pages 1165-1175, XP011186298, ISSN: 1530-437X, DOI: 10.1109/JSEN.2007.900937
- QIANG LUO ET AL: "A time-based cmos image sensor", PROCEEDINGS / 2004 IEEE INTERNATIONAL SYMPOSIUM ON CIRCUITS AND SYSTEMS : MAY 23 - 26, 2004, SHERATON VANCOUVER WALL CENTRE HOTEL, VANCOUVER, BRITISH COLUMBIA, CANADA, IEEE OPERATIONS CENTER, PISCATAWAY, NJ, 23 mai 2004 (2004-05-23), pages 840-843, XP010720143, ISBN: 978-0-7803-8251-0

## Description

### Domaine

La présente demande concerne le domaine des capteurs d'images de façon générale, et vise plus particulièrement le domaine des capteurs d'images à codage temporel.

### Exposé de l'art antérieur

De façon classique, un capteur d'images comprend une pluralité de pixels (ou cellules élémentaires) identiques ou similaires, par exemple agencés en matrice selon des lignes et des colonnes. Chaque pixel comprend une photodiode dont la capacité est déchargée par un photocourant en fonction d'une intensité lumineuse reçue. Traditionnellement, lors d'une phase d'acquisition d'une image, chaque pixel est d'abord réinitialisé par rechargement de sa photodiode à une tension de réinitialisation. La photodiode est ensuite isolée du noeud d'application de la tension de réinitialisation, et la tension aux bornes de la photodiode décroit en fonction de l'intensité lumineuse reçue par le pixel. Après une période d'intégration prédéterminée identique pour tous les pixels du capteur, chaque pixel fournit un signal analogique de sortie représentatif de la tension aux bornes de sa photodiode. Ce signal est numérisé par un circuit de conversion analogique-numérique, et constitue la valeur de sortie du pixel.

Pour pallier certains inconvénients des capteurs d'images traditionnels, notamment en termes de dynamique, de rapport signal sur bruit, et/ou de consommation, on a proposé des capteurs d'images dits à codage temporel, dans lesquels chaque pixel comprend un comparateur comparant la tension aux bornes de la photodiode à une tension de référence. Lors d'une phase d'acquisition d'une image, chaque pixel est d'abord réinitialisé par rechargement de sa photodiode à une tension de réinitialisation. La photodiode de chaque pixel est ensuite isolée du noeud d'application de la tension de réinitialisation, et la tension aux bornes de la photodiode décroit en fonction de l'intensité lumineuse reçue par le pixel. Lorsque la tension aux bornes de la photodiode d'un pixel atteint la tension de référence, la sortie du comparateur change d'état. On dit que le pixel s'allume. Le pixel génère alors une impulsion transmise à un circuit de lecture externe au pixel. L'adresse du pixel ayant émis l'impulsion est alors déterminée par le circuit de lecture. L'instant de lecture de l'adresse du pixel est mémorisé et constitue la valeur de sortie du pixel.

On s'intéresse ici plus particulièrement aux capteurs dans lesquels chaque pixel ne peut s'allumer qu'une seule fois lors d'une phase d'acquisition d'une image. Des exemples de tels capteurs sont par exemple décrits dans les articles intitulés "A time-to-first spike CMOS imager" de Xin Qi et al, et "An asynchronous time-based image sensor" de Posch C. et al. Il existe un besoin d'améliorer au moins en partie certains aspects des capteurs d'images à codage temporel connus.

### Résumé

Pour cela, un mode de réalisation prévoit un capteur d'images tel qu'indiqué dans la revendication indépendante 1 qui comporte : un premier circuit de contrôle ; une pluralité de pixels comportant chacun un photodétecteur, un comparateur du niveau d'un signal de sortie du photodétecteur à une valeur de référence, et un deuxième circuit de contrôle connecté au premier circuit de contrôle, le deuxième circuit étant adapté à envoyer un signal de requête en lecture d'adresse au premier circuit lorsque le pixel s'allume, c'est-à-dire lorsque le niveau du signal de sortie de son photodétecteur atteint la valeur de référence, à recevoir un signal d'acquittement de lecture d'adresse émis par le premier circuit, et à désactiver le pixel à réception du signal d'acquittement de lecture ; et au moins un troisième circuit de contrôle adapté, lorsqu'un pixel reçoit un signal d'acquittement de lecture, à bloquer l'émission des signaux de requête en lecture d'adresse dans au moins un pixel adjacent.

Selon un mode de réalisation, les pixels sont disposés en matrice selon des lignes et des colonnes, la matrice étant divisée en une pluralité de blocs de pixels adjacents, ce capteur comportant un troisième circuit de contrôle par bloc de pixels, connecté aux deuxièmes circuits des différents pixels du bloc.

Selon un mode de réalisation, dans chaque bloc de pixels adjacents, le troisième circuit de contrôle est adapté, lors d'une phase d'acquisition d'une image, lorsqu'un premier pixel du bloc reçoit un signal d'acquittement de lecture, à bloquer l'émission des signaux de requête en lecture d'adresse dans tous les pixels du bloc pendant une période d'inhibition prédéterminée.

Selon un mode de réalisation, les pixels du bloc s'allumant pendant la période d'inhibition sont désactivés sans être lus par le premier circuit de contrôle.

Selon un mode de réalisation, la valeur du premier pixel du bloc à avoir été acquitté est affectée aux pixels du bloc désactivés pendant la période d'inhibition.

Selon un mode de réalisation, à l'issue de la période d'inhibition, pour les pixels du bloc qui ne se sont pas encore allumés, l'émission de requêtes en lecture d'adresse est débloquée.

Selon un mode de réalisation, à la fin d'une période d'intégration prédéterminée du capteur, les pixels du capteur qui ne se sont pas allumés sont forcés à l'état allumé, et sont lus par le premier circuit de contrôle.

Selon un mode de réalisation, la période d'inhibition a une durée comprise entre 10⁻⁶ fois et 10⁻¹ fois la période d'intégration du capteur.

Selon un mode de réalisation, dans chaque bloc de pixels adjacents, le troisième circuit de contrôle est adapté à fournir un signal binaire indiquant si l'ensemble des pixels du bloc est allumé.

Selon un mode de réalisation, la matrice de pixels est divisée en macroblocs comprenant chacun plusieurs blocs adjacents, et, dans chaque macrobloc, un quatrième circuit de contrôle fournit un signal de sortie binaire indiquant si tous les pixels du macrobloc sont allumés.

Selon un mode de réalisation, lorsque tous les pixels d'un macrobloc sont allumés et qu'un premier pixel du macrobloc a été lu par le premier circuit de contrôle, le macrobloc est désactivé sans que les autres pixels du macrobloc ne soient lus.

Selon un mode de réalisation, la valeur du premier pixel du macrobloc à avoir été lu est affectée à l'ensemble des pixels du macrobloc.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique simplifié d'un exemple d'un capteur d'images à codage temporel ;
la figure 2 est un chronogramme illustrant de façon schématique le fonctionnement du capteur de la figure 1 ;
la figure 3 est un schéma électrique détaillé d'un exemple de réalisation d'un pixel du capteur de la figure 1 ;
la figure 4 représente de façon schématique le fonctionnement d'un capteur d'images à codage temporel selon un premier mode de réalisation ;
la figure 5 est un schéma électrique simplifié et partiel d'un exemple d'un capteur d'images à codage temporel selon le premier mode de réalisation ;
la figure 6 est un schéma électrique détaillé d'un exemple de réalisation d'un pixel du capteur de la figure 5 ; et
la figure 7 représente de façon schématique le fonctionnement d'un capteur d'images à codage temporel selon un deuxième mode de réalisation.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, les circuits de commande et de lecture extérieurs à la matrice de pixels des capteurs d'images à codage temporel décrits n'ont pas été détaillés, les modes de réalisation décrits étant compatibles avec les circuits de lecture usuels de capteurs de ce type. Par ailleurs, sauf précision contraire, les expressions "approximativement", "sensiblement", et "de l'ordre de" signifient à 10 % près, de préférence à 5 % près. En outre, on utilise ici le terme "connecté" pour désigner une liaison électrique directe, sans composant électronique intermédiaire, par exemple au moyen d'une ou plusieurs pistes conductrices, et le terme "couplé" ou le terme "relié", pour désigner soit une liaison électrique directe (signifiant alors "connecté") soit une liaison via un ou plusieurs composants intermédiaires (résistance, condensateur, etc.).

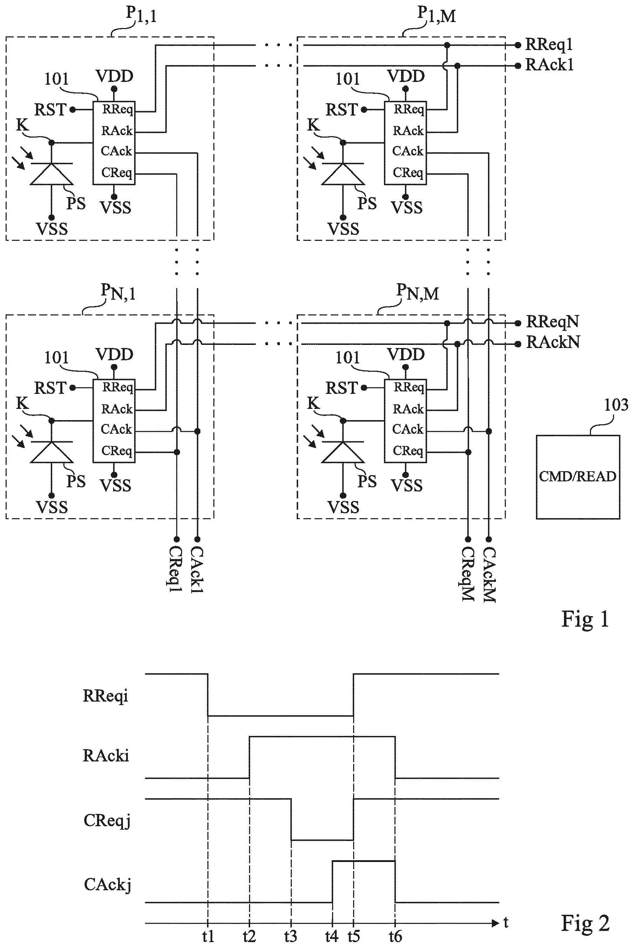

La figure 1 est un schéma électrique simplifié d'un exemple d'un capteur d'images à codage temporel.

Le capteur de la figure 1 comprend une pluralité de pixels identiques ou similaires. Dans l'exemple représenté, le capteur comprend NxM pixels P_{i,j} agencés en matrice selon N lignes et M colonnes, avec N et M entiers supérieurs à 1, i entier allant de 1 à N désignant le rang de la ligne à laquelle appartient le pixel P_{i,j}, et j entier allant de 1 à M désignant le rang de la colonne à laquelle appartient le pixel P_{i,j}.

Chaque pixel P_{i,j} comprend un photodétecteur PS fournissant un signal analogique de sortie évoluant dans le temps en fonction d'une intensité lumineuse reçue. Dans cet exemple, le photodétecteur PS est une photodiode polarisée en inverse, dont l'anode est connectée à un noeud VSS d'application d'un potentiel de référence bas, par exemple un potentiel d'alimentation bas du capteur, et dont la cathode est connectée à un noeud d'accumulation K. Dans cet exemple, le signal de sortie du photodétecteur PS est le potentiel du noeud K (ou tension aux bornes de la photodiode en considérant le potentiel du noeud VSS comme potentiel de référence). Lorsque la photodiode est éclairée, le potentiel du noeud K décroit à une vitesse dépendant de l'intensité lumineuse reçue.

Chaque pixel P_{i,j} comprend un circuit interne 101 connecté au noeud K. Le circuit 101 comprend des noeuds d'alimentation basse et haute connectés respectivement au noeud VSS et à un noeud VDD d'application d'un potentiel de référence haut supérieur au potentiel du noeud VSS, par exemple un potentiel d'alimentation haute du capteur. Le circuit 101 comprend de plus un noeud RST d'application d'un signal binaire de commande en réinitialisation du pixel. Lorsque le signal appliqué sur le noeud RST est à un état dit actif, par exemple à l'état bas, le noeud d'accumulation K est réinitialisé à un potentiel de réinitialisation sensiblement égal au potentiel d'alimentation haute VDD. Lorsque le signal appliqué sur le noeud RST est à un état dit inactif, par exemple à l'état haut, le noeud K est isolé du potentiel de réinitialisation, de sorte que le potentiel du noeud K évolue librement en fonction de l'intensité lumineuse reçue.

Le circuit 101 comprend en outre un comparateur adapté à comparer le potentiel du noeud K à un potentiel de référence intermédiaire compris entre le potentiel VSS et le potentiel VDD. Ce potentiel de référence peut être commun à tous les pixels du capteur. Ainsi, un noeud (non visible sur la figure 1) de sortie du comparateur est à un premier état dit éteint, par exemple un état bas, lorsque le potentiel du noeud K est supérieur à la valeur de référence du comparateur, et à un second état dit allumé, par exemple un état haut, lorsque le potentiel du noeud K est inférieur ou égal à la valeur de référence du comparateur.

Le circuit 101 est adapté à communiquer de manière asynchrone avec un circuit de commande et de lecture 103 (CMD/READ) extérieur à la matrice de pixels. Pour cela, le circuit 101 comprend un noeud RReq d'application d'un signal binaire de requête en lecture ligne, un noeud RAck de réception d'un signal binaire d'acquittement ligne, un noeud CReq d'application d'un signal binaire de requête en lecture colonne, et un noeud CAck de réception d'un signal binaire d'acquittement colonne. Dans l'exemple de la figure 1, dans chaque ligne de rang i de pixels, les noeuds RReq des pixels de la ligne sont connectés à une même piste conductrice RReqi et les noeuds RAck des pixels de la ligne sont connectés à une même piste conductrice RAcki, et, dans chaque colonne de rang j de pixels, les noeuds CReq des pixels de la colonne sont connectés à une même piste conductrice CReqj et les noeuds CAck des pixels de la colonne sont connectés à une même piste conductrice CAckj. Les pistes RReqi, RAcki, CReqj et CAckj sont connectées à des noeuds d'entrée/sortie distincts (non représentés sur la figure 1) du circuit de commande et de lecture 103 du capteur.

Le fonctionnement du capteur de la figure 1 va maintenant être décrit en relation avec les figures 1 et 2.

Lors d'une phase d'acquisition d'une image, chaque pixel est d'abord réinitialisé par rechargement de sa photodiode à une tension de réinitialisation. Pour cela, le potentiel du noeud RST est mis à l'état actif. La photodiode de chaque pixel est ensuite isolée du noeud d'application de la tension de réinitialisation, ce qui marque le début de la période d'intégration. Pour cela, le potentiel du noeud RST est mis à l'état inactif. Dans l'exemple de la figure 1, tous les pixels sont réinitialisés simultanément. A titre d'exemple, les noeuds RST de tous les pixels du capteur sont connectés à un même noeud d'application d'un signal de réinitialisation, par exemple un noeud de sortie du circuit 103.

Après la phase de réinitialisation, la tension aux bornes de la photodiode de chaque pixel décroit en fonction de l'intensité lumineuse reçue par le pixel. Lorsque la tension aux bornes de la photodiode d'un pixel Pᵢ,ⱼ atteint la tension de référence du comparateur du pixel, la sortie du comparateur du pixel change d'état. On dit que le pixel s'allume.

Lorsqu'un pixel s'allume, une phase de communication asynchrone avec le circuit de commande et de lecture 103 est initiée par le pixel, puis l'adresse du pixel est lue par le circuit de commande et de lecture 103. Une valeur numérique représentative de l'instant de lecture de l'adresse du pixel par le circuit 103, par exemple la valeur de sortie d'un compteur d'impulsions d'un signal d'horloge périodique, est mémorisée dans une mémoire destinée à stocker l'image acquise par le capteur. Cette valeur constitue la valeur de sortie du pixel. La période entre l'instant d'allumage du pixel et l'instant effectif de lecture de l'adresse du pixel par le circuit 103 doit être relativement brève pour ne pas altérer de façon significative l'information de luminosité.

La figure 2 illustre l'évolution des signaux de communication asynchrone appliqués sur les pistes conductrices RReqi, RAcki, CReqj et RAckj lors d'une phase de lecture de l'adresse du pixel P_{i,j} par le circuit 103, faisant suite à l'allumage du pixel P_{i,j}.

Dans cet exemple, on considère que les pistes conductrices RReqi et CReqj sont par défaut pré-chargées à un état haut par le circuit 103, et que les pistes conductrices RAcki et CAckj sont par défaut maintenues à un état bas par le circuit 103. Les modes de réalisation décrits ne se limitent toutefois pas à ce cas particulier.

A un instant t1, lorsque le pixel P_{i,j} s'allume, le circuit de contrôle 101 du pixel P_{i,j} tire le potentiel de la piste conductrice RReqi à un état bas, par exemple au potentiel VSS. La mise à l'état bas de la piste RReqi correspond à l'émission d'une requête en lecture de ligne par le pixel P_{i,j}, à destination du circuit 103.

A un instant t2 postérieur à l'instant t1, lorsque le circuit 103 est en mesure de traiter la requête émise sur la ligne de rang i, le circuit 103 acquitte la requête en lecture de ligne en appliquant un signal d'acquittement de ligne sur la piste RAcki. Pour cela, dans cet exemple, le circuit 103 met le potentiel de la piste RAcki à un état haut.

A un instant t3 postérieur à l'instant t2, par exemple à réception du signal d'acquittement de ligne, le circuit de contrôle 101 du pixel P_{i,j} tire le potentiel de la piste conductrice CReqj à un état bas, par exemple au potentiel VSS. La mise à l'état bas de la piste CReqj correspond à l'émission d'une requête en lecture de colonne par le pixel P_{i,j}, à destination du circuit 103. Plus particulièrement, à ce stade, tous les pixels allumés de la ligne de rang i émettent une requête en lecture de colonne. A réception de la requête en lecture de colonne, le circuit de contrôle et de lecture 103 sait que le pixel P_{i,j} est allumé. Si d'autres pixels de la ligne i sont allumés, le circuit 103 est également en mesure de déterminer leurs adresses. Une valeur représentative du temps, par exemple la valeur de sortie d'un compteur d'impulsions d'un signal d'horloge, est alors mémorisée dans un emplacement mémoire correspondant au point d'image acquis par le pixel P_{i,j}. Si d'autres pixels de la ligne i sont allumés, cette même valeur peut être écrite dans des emplacements mémoire associés aux pixels correspondants.

A un instant t4 postérieur à l'instant t3, le circuit 103 acquitte la requête en lecture de colonne en appliquant un signal d'acquittement de colonne sur la piste CAckj. Pour cela, dans cet exemple, le circuit 103 met le potentiel de la piste CAckj à un état haut.

A un instant t5 postérieur à l'instant t4, par exemple à réception du signal d'acquittement de colonne, le circuit de contrôle 101 du pixel P_{i,j} cesse de tirer à un potentiel bas les pistes conductrices RReqi et CReqj du pixel, qui se rechargent alors à une valeur haute fixée par le circuit 103.

A un instant t6, par exemple postérieur à l'instant t5, le circuit 103 remet les potentiels des pistes d'acquittement ligne RAcki et d'acquittement colonne CAckj à l'état bas, ce qui marque la fin de la phase de lecture d'adresse du pixel P_{i,j}.

Le circuit 103 se met alors en attente d'une nouvelle requête ligne, ou acquitte une requête ligne en attente de traitement. On notera en effet que dans le mode de fonctionnement qui vient d'être décrit, le circuit de contrôle et de lecture 103 peut acquitter simultanément plusieurs requêtes de lecture colonne, mais ne peut acquitter qu'une seule requête de lecture ligne à la fois pour pouvoir déterminer de façon certaine les adresses des pixels allumés.

Une fois l'adresse du pixel P_{i,j} lue, par exemple à réception du signal d'acquittement de colonne sur son noeud CAck, le circuit de contrôle 101 du pixel désactive le pixel de façon que ce pixel ne puisse plus émettre de requête en lecture jusqu'à la fin de la phase d'acquisition d'image.

A la fin d'une période d'intégration prédéterminée marquant la fin de la phase d'acquisition d'image, si un ou plusieurs pixels ne se sont pas allumés, une même valeur de sortie correspondant au plus faible niveau de luminosité de l'image est affectée à ces pixels.

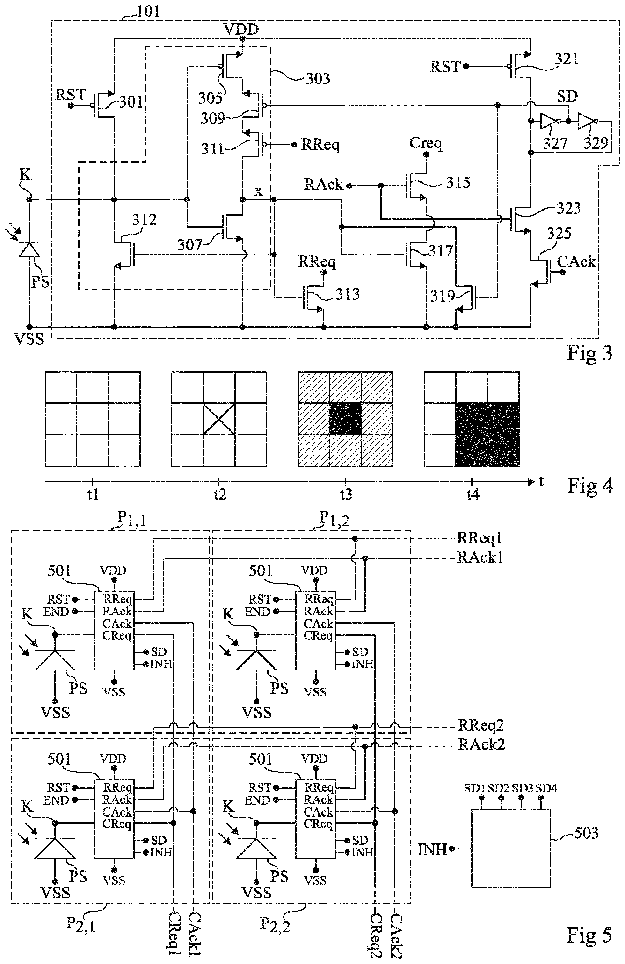

La figure 3 est un schéma électrique plus détaillé d'un exemple de réalisation d'un pixel du capteur de la figure 1. La figure 3 détaille plus particulièrement un exemple de réalisation du circuit de contrôle 101 d'un pixel du capteur de la figure 1.

Dans cet exemple, le circuit 101 comprend un transistor de réinitialisation 301 reliant le noeud K au noeud VDD et dont la grille est connectée au noeud RST. Dans l'exemple représenté, le transistor 301 est un transistor MOS à canal P dont la source est connectée au noeud VDD et dont le drain est connecté au noeud K.

Le circuit 101 comprend en outre un comparateur 303 comprenant un noeud d'entrée connecté au noeud K de sortie du photodétecteur PS, et un noeud de sortie X. Le comparateur est adapté à fournir sur son noeud de sortie X un signal binaire ayant un premier état, par exemple un état bas, lorsque le potentiel du noeud K est supérieur à une valeur de référence du comparateur, et un deuxième état, par exemple un état haut, lorsque le potentiel du noeud K est inférieur à la valeur de référence du comparateur. Dans l'exemple représenté, le comparateur 303 comprend un inverseur comprenant deux transistors 305 et 307 de types de conductivité opposés, reliés en série entre les noeuds VDD et VSS. Dans cet exemple, le comparateur comprend en outre deux transistors de désactivation 309 et 311 reliant le transistor 305 au transistor 307. Ainsi, le comparateur 303 comprend, entre les noeuds VDD et VSS, l'association en série des quatre transistors successifs 305, 309, 311 et 307. Les grilles des transistors 305 et 307 sont connectées au noeud K et forment l'entrée du comparateur 303. Le point milieu de l'association en série des transistors 311 et 307 est connecté au noeud X et forme la sortie du comparateur 303. Dans cet exemple, les transistors 305, 309 et 311 sont des transistors MOS à canal P, et le transistor 307 est un transistor MOS à canal N. La source du transistor 305 est connectée au noeud VDD. La source du transistor 309 est connectée au drain du transistor 305. La source du transistor 311 est connectée au drain du transistor 309. Le drain du transistor 311 est connecté au noeud X et au drain du transistor 307. La source du transistor 307 est connectée au noeud VSS. Dans cet exemple, pour que ses transitions soient plus franches, le comparateur 303 comprend en outre une boucle de rétroaction comportant un transistor 312 reliant le noeud K au noeud VSS et dont la grille est connectée au noeud X. Dans l'exemple représenté, le transistor 312 est un transistor MOS à canal N dont la source est connectée au noeud VSS et dont le drain est connecté au noeud K.

Le circuit 101 comprend par ailleurs un transistor 313 reliant le noeud RReq au noeud VSS, et dont la grille est connectée au noeud X. Dans cet exemple, le transistor 313 est un transistor MOS à canal N dont la source est connectée au noeud VSS et dont le drain est connecté au noeud RReq.

Le circuit 101 comprend en outre deux transistors 315 et 317 en série entre le noeud CReq et le noeud VSS. Le transistor 315, connecté au noeud CReq, a sa grille connectée au noeud RAck, et le transistor 317, connecté au noeud VSS, a sa grille connectée au noeud X. Dans cet exemple, les transistors 315 et 317 sont des transistors MOS à canal N, la source du transistor 317 est connectée au noeud VSS, la source du transistor 315 est connectée au drain du transistor 317, et le drain du transistor 315 est connecté au noeud CReq.

Le circuit 101 comprend de plus un transistor 319 reliant le noeud X au noeud VSS. Dans cet exemple, le transistor 319 est un transistor MOS à canal N dont la source est connectée au noeud VSS et dont le drain est connecté au noeud X.

Le circuit 101 comprend en outre trois transistors 321, 323 et 325 en série entre les noeuds VDD et VSS. Le transistor 321, connecté au noeud VDD, est un transistor de réinitialisation dont la grille est connectée au noeud RST. La grille du transistor 323 est connectée au noeud RAck, et la grille du transistor 325 est connectée au noeud CAck. Dans cet exemple, le transistor 321 est un transistor MOS à canal P, et les transistors 323 et 325 sont des transistors MOS à canal N. Le transistor 321 a sa source connectée au noeud VDD et son drain connecté au drain du transistor 323, le transistor 323 a sa source connectée au drain du transistor 325, et le transistor 325 a sa source connectée au noeud VSS.

Le circuit 101 comprend en outre deux inverseurs 327 et 329 connectés en série, l'entrée de l'inverseur 327 étant connectée au point milieu de l'association en série des transistors 321 et 323, et à la sortie de l'inverseur 329. Le point milieu SD entre les inverseurs 327 et 329 (c'est-à-dire le noeud de sortie de l'inverseur 327 et d'entrée de l'inverseur 329) est connecté à la grille du transistor 309 et la grille du transistor 319.

Le fonctionnement du pixel de la figure 3 va maintenant être décrit.

Lors d'une phase de réinitialisation, le potentiel du noeud RST est mis à l'état bas, ce qui entraine la mise en conduction des transistors 301 et 321. Le noeud K est ainsi réinitialisé à un potentiel sensiblement égal au potentiel VDD (à la chute de tension du transistor 301 près). De plus, le point mémoire formé par l'association des inverseurs 327 et 329 est réinitialisé à l'état bas, c'est-à-dire que le potentiel du noeud SD est mis à l'état bas, d'où il résulte que le transistor 309 est passant et que le transistor 319 est bloqué. On considère en outre, dans un premier temps, que le transistor 311 est commandé à l'état passant.

A la fin de la phase de réinitialisation, le potentiel du noeud K est à un état haut, et la sortie X du comparateur 303 est à un état bas. Les transistors 313 et 317 sont donc non passants. Le signal RST est remis à l'état haut, de façon que le noeud K soit isolé du noeud VDD, ce qui marque le début de la période d'intégration. Le potentiel du noeud K décroit alors en fonction de l'intensité lumineuse reçue.

Lorsque le potentiel du noeud K passe sous le seuil de commutation de l'inverseur formant le comparateur 303, le noeud X passe à l'état haut, ce qui correspond à l'allumage du pixel.

Le transistor 313 devient alors passant, et le noeud RReq du pixel est tiré sensiblement au potentiel du noeud VSS, ce qui correspond à l'émission d'une requête en lecture de ligne par le pixel. Le transistor 317 est en outre rendu passant.

Lorsque le signal d'acquittement de ligne RAck est mis à l'état haut par le circuit de commande et de lecture 103 (figure 1), le transistor 315 devient passant, et le noeud CReq du pixel est tiré sensiblement au potentiel du noeud VSS, ce qui correspond à l'émission d'une requête en lecture de colonne par le pixel. Le transistor 323 est en outre rendu passant.

Lorsque le signal d'acquittement de colonne CAck est mis à l'état haut par le circuit de commande et de lecture 103 (figure 1), le transistor 325 devient passant, ce qui entraine l'écriture d'un état haut dans le point mémoire formé par les inverseurs 327 et 329. Ainsi, le noeud SD est mis à l'état haut, et reste à l'état haut jusqu'à la prochaine réinitialisation du pixel. Il en résulte que le transistor 309 est rendu non-passant, de sorte que le comparateur 303 est désactivé jusqu'à la fin de la phase d'acquisition de l'image. En outre, le transistor 319 est rendu passant, de sorte que le noeud X est ramené à un état bas (sensiblement au potentiel du noeud VSS), ce qui revient à forcer le pixel à l'état éteint jusqu'à la fin de la phase d'acquisition.

Dans l'exemple de la figure 3, la grille du transistor 311 est connectée au noeud RReq, ce qui permet de désactiver le comparateur 303 lorsque le signal RReq est mis à l'état haut.

Un problème qui peut se poser dans un capteur du type décrit en relation avec les figures 1 à 3 est celui des collisions d'évènements, lorsque plusieurs pixels du capteur s'allument simultanément ou à des instants rapprochés. En effet, l'ensemble des opérations entre l'allumage d'un pixel et la lecture effective de son adresse par le circuit 103 induit un décalage temporel qui se superpose à l'information de luminosité. Ce décalage est négligeable si seul un petit nombre de pixels s'allument en même temps, mais peut dégrader significativement la qualité de l'image si de nombreux pixels s'allument simultanément, par exemple si de grandes zones du capteur reçoivent sensiblement le même niveau de luminosité, ce qui arrive relativement souvent dans les scènes courantes.

Un objet d'un mode de réalisation est de résoudre au moins en partie ce problème.

La figure 4 représente de façon schématique le fonctionnement d'un capteur d'images à codage temporel selon un premier mode de réalisation.

Selon un aspect du premier mode de réalisation, la matrice de pixels du capteur est divisée en blocs de plusieurs pixels. Dans l'exemple illustré par la figure 4, la matrice de pixels du capteur est divisée en blocs de 3x3 pixels.

La figure 4 représente schématiquement un bloc de pixels du capteur à plusieurs instants d'une phase d'acquisition d'une image.

A un instant t1 de début de la phase d'acquisition, tous les pixels du bloc sont à un état éteint non forcé, c'est-à-dire que, dans chaque pixel du bloc, le comparateur du pixel est activé mais n'a pas encore commuté car le signal de sortie du photodétecteur n'a pas encore atteint la valeur de référence du comparateur du pixel. Les pixels à l'état éteint non forcé sont représentés en blanc sur la figure 4.

A un instant t2 postérieur à l'instant t1, le pixel le plus lumineux du bloc de pixels, le pixel central du bloc dans l'exemple représenté, s'allume. Les pixels à l'état allumé sont représentés barrés d'une croix sur la figure 4. S'en suit une phase de communication asynchrone entre le pixel et le circuit de commande et de lecture du capteur, par exemple du type décrit en relation avec la figure 2, cette phase de communication comprenant notamment l'émission d'une requête en lecture d'adresse par le circuit de contrôle du pixel allumé (sous la forme d'une impulsion sur la piste RReqi dans l'exemple de la figure 2), et conduisant à la détermination de l'adresse du pixel allumé par le circuit de commande et de lecture du capteur.

A un instant t3 postérieur à l'instant t2, après réception d'un signal d'acquittement de lecture d'adresse émis par le circuit de commande et de lecture du capteur (sous la forme d'une impulsion sur la piste CAckj dans l'exemple de la figure 2), le pixel est forcé à l'état éteint jusqu'à la fin de la phase d'acquisition, c'est-à-dire que la sortie de son comparateur est forcée à l'état éteint et ne dépend plus de l'intensité lumineuse reçue par le photodétecteur.

A l'instant t3, l'ensemble des pixels du bloc est inhibé pendant une période d'inhibition Tᵢₙₕ prédéterminée, de préférence courte devant la période d'intégration totale du capteur (c'est-à-dire la période comprise entre la fin de la phase de réinitialisation et la fin de la phase d'acquisition de l'image - ou temps trame). A titre d'exemple, la période d'inhibition Tᵢₙₕ est comprise entre 10⁻⁶*T_{img} et 10⁻¹*T_{img}, par exemple de l'ordre de 10⁻⁴*T_{img}, T_{img} étant la période d'intégration totale du capteur, par exemple comprise entre 5 et 50 ms, par exemple de l'ordre de 20 ms.

Comme cela sera expliqué plus en détail ci-après, un pixel inhibé se comporte sensiblement de la même manière que ce qui a été décrit précédemment en relation avec les figures 1 à 3, à la différence près qu'il ne peut pas émettre de requête en lecture d'adresse.

Lorsqu'un pixel à l'état éteint non forcé est inhibé, ce pixel est susceptible de s'allumer pendant la période d'inhibition Tᵢₙₕ. Si ce pixel s'allume pendant la période d'inhibition Tᵢₙₕ, il n'émet pas de requête en lecture d'adresse et est directement forcé à l'état éteint jusqu'à la fin de la phase d'acquisition, sans passer par la phase de communication asynchrone avec le circuit de commande et de lecture du capteur.

En outre, si l'inhibition d'un pixel intervient alors que le pixel est déjà allumé (par exemple si l'allumage du pixel intervient dans l'intervalle t2-t3 dans l'exemple de la figure 4), ce pixel est forcé à l'état éteint jusqu'à la fin de la phase d'acquisition, sans passer par la phase de communication asynchrone avec le circuit de lecture du capteur.

Les pixels à l'état inhibé sont représentés en hachuré sur la figure 4.

A la fin de la période d'inhibition Tᵢₙₕ, à un instant t4, le bloc de pixels est désinhibé, c'est-à-dire que, pour les pixels du bloc qui n'ont pas encore été forcés à l'état éteint, l'émission de requêtes en lecture d'adresse est à nouveau rendue possible, et la phase d'acquisition se poursuit de façon identique ou similaire à ce qui a été décrit précédemment en relation avec les figures 1 à 3.

A la fin de la période d'intégration T_{img} du capteur, s'il reste des pixels à l'état éteint non forcé, ces pixels sont forcés à l'état allumé, et sont lus par le circuit de lecture du capteur de façon identique ou similaire à ce qui a été décrit précédemment en relation avec les figures 1 à 3.

L'image finale est reconstruite en affectant, dans chaque bloc de pixels, à tous les pixels du bloc non lus par le circuit de lecture, la valeur du pixel le plus lumineux du bloc.

Ainsi, dans le mode de fonctionnement de la figure 4, au lieu de lire effectivement tous les pixels du capteur au risque de générer une quantité importante de collisions entrainant des distorsions significatives de l'image, on prévoit, dans chaque bloc de pixels du capteur, d'affecter la valeur du pixel le plus lumineux du bloc à tous les pixels du bloc recevant une intensité lumineuse voisine de celle reçue par ce pixel.

Ce mode de fonctionnement est tout particulièrement avantageux lorsqu'une plage de même niveau de luminosité couvre plusieurs blocs entiers de pixels. Dans ce cas, un unique pixel par bloc est effectivement lu par le circuit de lecture, ce qui permet de réduire significativement les collisions.

Dans le mode de fonctionnement décrit en relation avec la figure 4, une unique période d'inhibition est mise en oeuvre dans chaque bloc de pixels, à réception de l'acquittement de lecture du pixel le plus lumineux du bloc. Si des pixels du bloc ne se sont pas allumés à la fin de la période d'inhibition Tᵢₙₕ, ces pixels sont lus de façon identique ou similaire à ce qui a été décrit précédemment en relation avec les figures 1 à 3. On remarquera que lors de la lecture de ces pixels, des collisions peuvent se produire. Toutefois, les pixels sombres sont moins sensibles aux collisions, c'est-à-dire aux distorsions de la valeur temporelle représentative de l'intensité lumineuse reçue, que les pixels plus lumineux. En effet, pour un même retard de transmission de l'instant d'allumage d'un pixel, l'erreur de codage est plus importante pour un pixel lumineux, c'est-à-dire traversé par un fort photocourant (et dans lequel la capacité du photodétecteur se décharge donc rapidement), que pour un pixel sombre, c'est-à-dire traversé par un faible photocourant (et dans lequel la capacité du photodétecteur se décharge donc lentement). Ainsi, il est avantageux d'inhiber un bloc de pixels au moment de la lecture de son pixel le plus lumineux, les plages de pixels plus sombres étant naturellement moins sensibles aux retards de transmission.

Le mode de réalisation de la figure 4 ne se limite bien entendu pas au cas où les blocs de pixels inhibés simultanément sont des blocs carrés de 3x3 pixels. Plus généralement, chaque bloc comprend au moins deux pixels adjacents. Les blocs sont de préférence tous de même taille. Les blocs sont par exemple des blocs matriciels de n lignes par m colonnes de pixels adjacents, avec n et m entiers supérieurs à 1, n et m étant par exemple des sous-multiples de N et M respectivement. A titre d'exemple, les blocs sont des blocs matriciels de 4 à 100 pixels adjacents.

La figure 5 est un schéma électrique partiel et simplifié d'un exemple d'un mode de réalisation d'un capteur d'images à codage temporel adapté à mettre en oeuvre le fonctionnement décrit en relation avec la figure 4.

Le capteur de la figure 5 comprend des éléments communs avec le capteur de la figure 1. Ces éléments ne seront pas détaillés à nouveau ci-après. Dans la suite, seules les différences entre le capteur de la figure 5 et le capteur de la figure 1 seront détaillées.

Comme dans l'exemple de la figure 1, le capteur de la figure 5 comprend une pluralité de pixels P_{i,j} identiques ou similaires agencés en matrice selon des lignes et des colonnes. Dans l'exemple de la figure 5, les pixels sont répartis en blocs de 2x2 pixels adjacents. Sur la figure 5, seul un bloc du capteur a été représenté, ce bloc comprenant les pixels communs aux lignes de rang 1 et 2 et aux colonnes de rang 1 et 2 du capteur.

Dans l'exemple de la figure 5, chaque pixel P_{i,j} comprend un circuit de contrôle interne 501 connecté au noeud de sortie K du photodétecteur, remplaçant le circuit de contrôle interne 101 de l'exemple de la figure 1. Le circuit 501 comprend des éléments communs avec le circuit 101. Ces éléments ne seront détaillés à nouveau. Dans la suite, seules les différences entre le circuit 501 et le circuit 101 seront détaillées.

Outre les noeuds VDD, VSS, RST, RReq, RAck, CReq, CAck déjà décrits en relation avec la figure 1, le circuit de contrôle interne 501 de la figure 5 comprend un noeud SD de fourniture d'un signal binaire indiquant si le pixel est ou non forcé à l'état éteint. A titre d'exemple, le noeud SD du circuit 501 de la figure 5 correspond au noeud SD du circuit 101 de la figure 3.

Le circuit 501 de la figure 5 comprend en outre un noeud INH d'application d'un signal binaire d'inhibition du pixel. Lorsque le signal d'inhibition appliqué sur le noeud INH est à un premier état dit actif, par exemple à l'état haut, le pixel est inhibé. Lorsque le signal d'inhibition appliqué sur le noeud INH est à un second état dit inactif, par exemple à l'état bas, le pixel est désinhibé.

Le circuit 501 de la figure 5 comprend en outre un noeud END d'application d'un signal binaire permettant de forcer l'allumage du pixel à la fin de la période d'intégration du capteur si le pixel n'est pas déjà forcé à l'état éteint. Lorsque le signal appliqué sur le noeud END est à un état dit actif, par exemple à l'état haut, le noeud d'accumulation K est mis à un potentiel bas, par exemple sensiblement égal au potentiel d'alimentation basse VSS, ce qui provoque l'allumage du pixel si le pixel n'est pas déjà forcé à l'état éteint. Lorsque le signal appliqué sur le noeud END est à un état dit inactif, par exemple à l'état bas, le noeud K est isolé du noeud VSS, et le potentiel du noeud K évolue librement en fonction de l'intensité lumineuse reçue.

Le capteur de la figure 5 comprend, comme dans l'exemple de la figure 1, un circuit de commande et de lecture 103 (non visible sur la figure 5) extérieur à la matrice de pixels, et avec lequel le circuit de contrôle 501 de chaque pixel est adapté à communiquer de manière asynchrone via ses noeuds RReq, RAck, CReq et CAck.

Dans le capteur de la figure 5, chaque bloc de pixels du capteur comprend un circuit de contrôle de bloc 503 connecté à chacun des pixels du bloc. Les circuits de contrôle 503 des différents blocs peuvent être identiques ou similaires. Dans l'exemple représenté, chaque pixel a son noeud SD connecté à un noeud d'entrée du circuit 503. Les différents pixels du bloc ont leurs noeuds SD connectés à des noeuds d'entrée distincts du circuit 503. Dans l'exemple représenté, le circuit 503 comprend quatre noeuds d'entrée SD1, SD2, SD3, SD4 connectés respectivement aux noeuds SD des quatre pixels du bloc.

Le circuit de contrôle de bloc 503 comprend en outre un noeud de fourniture d'un signal binaire d'inhibition du bloc, connecté aux noeuds INH de chacun des pixels du bloc.

Le fonctionnement du circuit de contrôle de bloc 503 est le suivant.

Au début d'une phase d'acquisition d'une image après réinitialisation des pixels, les signaux indicateurs d'extinction forcée fournis par les noeuds SD des différents pixels du bloc sont à l'état inactif, c'est-à-dire qu'aucun pixel n'est forcé à l'état éteint. Le signal d'inhibition fourni par le bloc 503 est alors à l'état inactif.

Lorsque le pixel le plus lumineux du bloc reçoit un acquittement de lecture de la part du circuit de commande et de lecture 103, ce pixel est forcé à l'état éteint par son circuit de contrôle interne, et le noeud SD de ce pixel change d'état.

Le signal d'inhibition fourni par le bloc 503 passe alors à l'état actif pendant une durée d'inhibition Tᵢₙₕ prédéterminée.

A la fin de la période Tᵢₙₕ, le signal d'inhibition repasse à l'état inactif, puis reste à l'état inactif jusqu'à la fin de la phase d'acquisition.

On notera que la réalisation du circuit de contrôle de bloc 503 n'a pas été détaillée, la réalisation d'un tel circuit étant à la portée de l'homme du métier à partir des indications fonctionnelles susmentionnées. A titre d'exemple, le circuit 503 peut comporter : un circuit logique permettant d'activer le signal d'inhibition lorsque l'un des noeuds SD1, SD2, SD3, SD4 change d'état, un circuit à retard, par exemple un circuit RC, permettant de fixer la durée Tᵢₙₕ d'activation du signal d'inhibition, et un point mémoire permettant, lorsque l'inhibition du bloc a eu lieu, de désactiver le circuit de contrôle de bloc 503 jusqu'à la fin de la phase d'acquisition de l'image.

En dehors de la période d'inhibition Tᵢₙₕ, le fonctionnement du capteur de la figure 5 est identique ou similaire à ce qui a été décrit en relation avec les figures 1 à 3.

De plus, dans le capteur de la figure 5, à la fin de la période d'intégration, un signal de forçage à l'état allumé est appliqué sur le noeud END de chacun des pixels du capteur de façon que, s'il reste des pixels à l'état éteint non forcé, ces pixels soient forcés à l'état allumé. Ces pixels sont alors lus par le circuit de lecture du capteur de façon identique ou similaire à ce qui a été décrit précédemment en relation avec les figures 1 à 3. A titre d'exemple, tous les pixels du capteur reçoivent simultanément le même signal de forçage à l'état allumé. Pour cela, les noeuds END de tous les pixels du capteur peuvent être connectés à un même noeud de sortie du circuit 103. A titre de variante, les pixels peuvent être forcés à l'état allumé ligne par ligne, avec un décalage temporel entre les lignes, de façon à limiter les risques de collision. Pour cela, dans chaque ligne de pixels du capteur, les noeuds END des pixels de la ligne sont connectés à un même noeud de sortie du circuit 103, et les noeuds END des pixels de lignes distinctes sont connectés à des noeuds de sortie distincts du circuit 103.

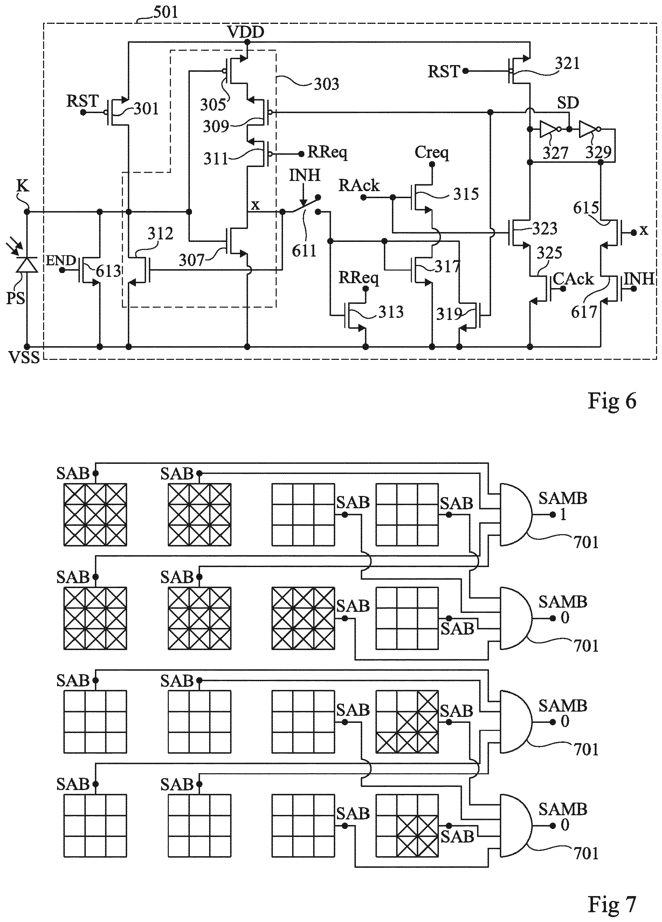

La figure 6 est un schéma électrique plus détaillé d'un exemple de réalisation d'un pixel du capteur de la figure 5. La figure 6 détaille plus particulièrement un exemple de réalisation du circuit de contrôle 501 du pixel.

Le circuit de contrôle 501 du pixel de la figure 6 comprend les mêmes éléments que le circuit de contrôle 101 du pixel de la figure 3, agencés sensiblement de la même manière. Ces éléments ne seront pas à nouveau détaillés ci-après. Dans la suite, seules les différences entre le circuit 501 de la figure 6 et le circuit 101 de la figure 3 seront détaillées.

Dans l'exemple de la figure 6, le noeud de sortie X du comparateur 303 n'est pas connecté directement aux grilles des transistors 313 et 317, mais est relié à un noeud X' par l'intermédiaire d'un interrupteur 611 dont un noeud de commande est connecté au noeud INH du circuit. En outre, dans l'exemple de la figure 6, le transistor 319 n'est pas directement connecté au noeud X, mais est connecté au noeud X'. Plus particulièrement, dans cet exemple, la source du transistor 319 est connectée au noeud VSS et son drain est connecté au noeud X'. Lorsque le signal d'inhibition appliqué sur le noeud INH est à l'état actif, par exemple à l'état haut, l'interrupteur 611 est ouvert, et, lorsque le signal d'inhibition appliqué sur le noeud INH est à l'état inactif, par exemple à l'état bas, l'interrupteur 611 est fermé.

De plus, le circuit 501 comprend un transistor 613 reliant le noeud K au noeud VSS, la grille du transistor 613 étant connectée au noeud END du circuit. Dans l'exemple représenté, le transistor 613 est un transistor MOS à canal N dont la source est connectée au noeud VSS et dont le drain est connecté au noeud K.

Le circuit 501 comprend en outre deux transistors 615 et 617 en série entre l'entrée de l'inverseur 327 et le noeud VSS, en parallèle de l'association en série des transistors 323 et 325. Le transistor 615, connecté à l'entrée du transistor 327, a sa grille connectée au noeud X, et le transistor 617, connecté au noeud VSS, a sa grille connectée au noeud INH. Dans l'exemple représenté, les transistors 615 et 617 sont des transistors MOS à canal N, la source du transistor 617 étant connectée au noeud VSS, le drain du transistor 617 étant connecté à la source du transistor 615, et le drain du transistor 615 étant connecté à l'entrée de l'inverseur 327.

Lorsque les signaux appliqués sur les noeuds END et INH sont à l'état inactif, c'est-à-dire lorsque les transistors 613 et 617 sont non passants et que l'interrupteur 611 est passant, le fonctionnement du pixel de la figure 6 est identique ou similaire à celui du pixel de la figure 3.

Lorsque le signal INH est mis à l'état actif pendant la période d'inhibition du bloc auquel appartient le pixel, l'interrupteur 611 est ouvert, de sorte que le pixel ne peut plus émettre de requête en lecture d'adresse. Le transistor 617 est en outre passant, de sorte que, si le pixel s'allume, c'est-à-dire si le potentiel du noeud X passe à l'état haut, le noeud SD est mis à l'état haut, et reste à l'état haut jusqu'à la prochaine réinitialisation du pixel. Le pixel est alors forcé à l'état éteint jusqu'à la fin de la phase d'acquisition.

Lorsque le signal END est mis à l'état actif (à l'état haut dans cet exemple), le transistor 613 est rendu passant. Il en résulte que le potentiel du noeud K est abaissé sensiblement au potentiel du noeud VSS. Ainsi, si le pixel était encore à l'état éteint non forcé, le pixel s'allume.

Les modes de réalisation décrits ne se limitent pas à l'exemple particulier de pixel décrit en relation avec la figure 6. Plus généralement, d'autres architectures de pixel adaptées à mettre en oeuvre le fonctionnement décrit en relation avec les figures 4 et 5 peuvent être prévues.

La figure 7 représente de façon schématique le fonctionnement d'un capteur d'images à codage temporel selon un deuxième mode de réalisation.

De même que dans le mode de réalisation de la figure 4, la matrice de pixels est divisée en blocs de plusieurs pixels adjacents. Dans l'exemple illustré par la figure 7, la matrice est divisée en blocs de 3x3 pixels. La figure 7 représente schématiquement une portion de capteur comportant 4x4 blocs de pixels adjacents, soit 12x12 pixels adjacents.

Les pixels du capteur de la figure 7 sont par exemple adaptés à fonctionner de façon identique ou similaire à ce qui a été décrit en relation avec les figures 1 à 3.

Chaque bloc de pixels du capteur de la figure 7 comprend en outre un circuit de contrôle de bloc adapté à déterminer si tous les pixels du bloc sont allumés simultanément. Le circuit de contrôle de bloc comprend par exemple une porte logique ET recevant en entrée les signaux de sortie des comparateurs de tous les pixels du bloc, et fournissant un signal binaire SAB (signal d'allumage du bloc) ayant un premier état (état allumé), par exemple un état haut, lorsque tous les pixels du bloc sont allumés, et un second état (état éteint), par exemple un état bas, lorsqu'au moins un pixel du bloc n'est pas allumé. Sur la figure 7, les circuits de contrôle de bloc n'ont pas été représentés. Seuls les noeuds de fourniture des signaux d'allumage de bloc SAB ont été représentés.

Dans le mode de réalisation de la figure 7, les blocs de pixels sont en outre regroupés en macro-blocs comportant chacun plusieurs blocs adjacents. Dans l'exemple représenté, la matrice de pixels est divisée en macro-blocs de 2x2 blocs adjacents. Les modes de réalisation décrits ne se limitent toutefois pas à ce découpage particulier.

Chaque macro-bloc est associé à un circuit logique, une porte ET dans l'exemple représenté, recevant les signaux d'allumage de bloc SAB des différents blocs du macro-bloc, et fournissant un signal binaire SAMB (signal d'allumage de macro-bloc) ayant un premier état (état allumé), par exemple un état haut, lorsque tous les blocs du macro-bloc sont allumés, et un second état (état éteint), par exemple un état bas, lorsqu'au moins un bloc du macro-bloc n'est pas allumé.

Chaque macro-bloc comprend en outre un circuit de contrôle de macro-bloc adapté, lorsque le signal SAMB du macro-bloc est à l'état allumé et que la lecture de l'un des pixels du macro-bloc a été acquittée, à acquitter simultanément la lecture de l'ensemble des pixels de ce macro-bloc. Pour cela, le circuit de contrôle de macro-bloc peut par exemple forcer à l'état inhibé les signaux INH de chacun des blocs du macro-bloc.

Les macro-blocs susmentionnés, ou macro-blocs de niveau 1, peuvent en outre être regroupés en macro-blocs de niveaux supérieurs comportant chacun plusieurs macro-blocs de niveau 1 adjacents. A titre d'exemple, les macro-blocs de niveau 1 peuvent être regroupés en macro-blocs de niveau 2 comportant chacun 2x2 macro-blocs de niveau 1 adjacents, les macro-blocs de niveau 2 peuvent être regroupés en macro-blocs de niveau 3 comportant chacun 2x2 macro-blocs de niveau 2 adjacents, et ainsi de suite jusqu'à un niveau n de macro-bloc, qui inclut par exemple l'intégralité de la matrice de pixels du capteur.

Chaque macro-bloc de niveau i supérieur à 1 est associé à un circuit logique, par exemple une porte ET recevant les signaux d'allumage des différents macro-blocs de niveau i-1 de ce macro-bloc, fournissant un signal binaire d'allumage du macro-bloc.

Chaque macro-bloc de niveau i supérieur à 1 comprend en outre un circuit de contrôle de macro-bloc adapté, lorsque le macro-bloc de niveau i est à l'état allumé et que la lecture de l'un des pixels de ce macro-bloc a été acquittée, à acquitter simultanément la lecture de l'ensemble des pixels de ce macro-bloc. Pour cela, le circuit de contrôle de macro-bloc peut par exemple forcer à l'état inhibé les signaux INH de chacun des blocs du macro-bloc de niveau i, par exemple via des signaux d'acquittement intermédiaires se propageant selon un agencement arborescent similaire à celui des signaux d'allumage des différents niveaux de macro-blocs.

Les pixels ainsi acquittés sont forcés à l'état éteint et ne peuvent donc plus émettre de requête de lecture, ce qui réduit le risque de collisions pour la suite de l'acquisition. La valeur de sortie du pixel effectivement lu est affectée à l'ensemble des pixels du macro-bloc ou des macro-blocs dont les pixels se sont allumés simultanément.

Ainsi, dans le mode de fonctionnement de la figure 7, au lieu de lire effectivement tous les pixels du capteur, on prévoit, lorsque des zones de l'image couvrant un ou plusieurs macro-blocs de pixels présentent sensiblement le même niveau de luminosité, de lire un unique pixel de la zone concernée et d'affecter la valeur lue à tous les pixels de la zone.

Le mode de réalisation de la figure 7 peut être combiné avec le mode de réalisation décrit en relation avec les figures 4 à 6. A titre d'exemple, lorsque le premier pixel d'un bloc est acquitté, le circuit de commande et de contrôle peut dans un premier temps déterminer si l'ensemble du macro-bloc auquel appartient ce pixel est allumé, auquel cas le fonctionnement décrit en relation avec la figure 7 est mis en oeuvre. L'ensemble des pixels du macro-bloc est alors désactivé jusqu'à la fin de la phase d'acquisition. Si l'ensemble du macro-bloc n'est pas allumé, un fonctionnement du type décrit en relation avec les figures 4 à 6 peut être mis en oeuvre, c'est-à-dire que le bloc est inhibé temporairement pendant une période Tᵢₙₕ, puis est réactivé à l'issue de la période Tᵢₙₕ.

Des modes de réalisation particuliers ont été décrits. Diverses variantes et modifications apparaîtront à l'homme de l'art.

En particulier, les modes de réalisation décrits ne se limitent pas à l'exemple susmentionné dans lequel le photodétecteur est une photodiode polarisée en inverse dont la capacité est déchargée par un photocourant en fonction d'une intensité lumineuse reçue. Plus généralement, tout photodétecteur fournissant un signal de sortie évoluant dans le temps en fonction d'une intensité lumineuse reçue peut être utilisé.

De plus, les modes de réalisation décrits ne se limitent pas à l'exemple particulier de protocole de communication asynchrone décrit en relation avec la figure 2 pour mettre en oeuvre les communications entre les pixels du capteur et le circuit de commande et de lecture du capteur.

## Revendications

1. Capteur d'images comportant :
un premier circuit de contrôle (103) ;
une pluralité de pixels (P_{i,j}) comportant chacun un photodétecteur (PS), un comparateur (303) du niveau d'un signal de sortie du photodétecteur (PS) à une valeur de référence, et un deuxième circuit de contrôle (501) connecté au premier circuit de contrôle (103), le deuxième circuit (501) étant adapté à envoyer un signal de requête en lecture d'adresse au premier circuit (103) lorsque le pixel s'allume, c'est-à-dire lorsque le niveau du signal de sortie de son photodétecteur (PS) atteint la valeur de référence, à recevoir un signal d'acquittement de lecture d'adresse émis par le premier circuit (103), et à désactiver le pixel à réception du signal d'acquittement de lecture, les pixels (P_{i,j}) étant répartis en une pluralité de blocs de pixels adjacents ; et
pour chaque bloc, au moins un troisième circuit de contrôle (503) adapté, lors d'une phase d'acquisition d'une image, lorsqu'un premier pixel (P_{i,j}) du bloc reçoit un signal d'acquittement de lecture, à bloquer l'émission des signaux de requête en lecture d'adresse dans tous les pixels du bloc pendant une période d'inhibition.

2. Capteur selon la revendication 1, dans lequel les pixels (P_{i,j}) sont disposés en matrice selon des lignes et des colonnes, la matrice étant divisée en ladite pluralité de blocs de pixels adjacents, et dans lequel, pour chaque bloc, le troisième circuit de contrôle (503) du bloc est connecté aux deuxièmes circuits (501) des différents pixels du bloc.

3. Capteur selon la revendication 2, dans lequel, dans chaque bloc de pixels adjacents, le troisième circuit de contrôle (503) est adapté, lors d'une phase d'acquisition d'une image, lorsqu'un premier pixel (P_{i,j}) du bloc reçoit un signal d'acquittement de lecture, à bloquer l'émission des signaux de requêtes en lecture d'adresse dans tous les pixels du bloc pendant une période d'inhibition (Tᵢₙₕ) prédéterminée.

4. Capteur selon la revendication 3, dans lequel les pixels du bloc s'allumant pendant la période d'inhibition (Tᵢₙₕ) sont désactivés sans être lus par le premier circuit de contrôle (103).

5. Capteur selon la revendication 4, dans lequel la valeur du premier pixel du bloc à avoir été acquitté est affectée aux pixels du bloc désactivés pendant la période d'inhibition (Tᵢₙₕ).

6. Capteur selon l'une quelconque des revendications 3 à 5, dans lequel, à l'issue de la période d'inhibition (Tᵢₙₕ), pour les pixels du bloc qui ne se sont pas encore allumés, l'émission de requêtes en lecture d'adresse est débloquée.

7. Capteur selon l'une quelconque des revendications 3 à 6, dans lequel, à la fin d'une période d'intégration prédéterminée (T_{img}) du capteur, les pixels (P_{i,j}) du capteur qui ne se sont pas allumés sont forcés à l'état allumé, et sont lus par le premier circuit de contrôle (103).

8. Capteur selon la revendication 7, dans lequel la période d'inhibition (Tᵢₙₕ) a une durée comprise entre 10⁻⁶ fois et 10⁻¹ fois la période d'intégration (T_{img}) du capteur.

9. Capteur selon l'une quelconque des revendications 1 à 8, dans lequel, dans chaque bloc de pixels adjacents, le troisième circuit de contrôle est adapté à fournir un signal binaire (SAB) indiquant si l'ensemble des pixels du bloc est allumé.

10. Capteur selon la revendication 9, dans lequel la matrice de pixels (P_{i,j}) est divisée en macroblocs comprenant chacun plusieurs blocs adjacents, et dans lequel, dans chaque macrobloc, un quatrième circuit de contrôle (701) fournit un signal de sortie binaire (SAMB) indiquant si tous les pixels du macrobloc sont allumés.

11. Capteur selon la revendication 10, dans lequel, lorsque tous les pixels d'un macrobloc sont allumés et qu'un premier pixel du macrobloc a été lu par le premier circuit de contrôle (103), le macrobloc est désactivé sans que les autres pixels du macrobloc ne soient lus.

12. Capteur selon la revendication 11, dans lequel la valeur du premier pixel (P_{i,j}) du macrobloc à avoir été lu est affectée à l'ensemble des pixels du macrobloc.

## Patentansprüche

1. Ein Bildsensor, der Folgendes aufweist:
Eine erste Steuerschaltung (103);
Eine Vielzahl von Pixel (p_{i,j}), die jede einen Photodetektor (PS) aufweisen, einen Komparator (303) des Pegels eines Ausgangssignals des Photodetektors (PS) mit einem Referenzwert, und eine zweite Steuerschaltung (501), die mit der ersten Steuerschaltung (103) verbunden ist, wobei die zweite Steuerschaltung (501) geeignet ist zum Senden eines Adressleseanfrage-Signals an die Steuerschaltung (103), wenn sich das Pixel einschaltet, was der Fall ist, wenn der Pegel des Ausgangssignals seines Photodetektors (PS) den Referenzwert erreicht zum Empfangen eines durch die erste Steuerschaltung (103) übermittelten Adresslesebestätigungs-Signals, und zum Deaktivieren des Pixels beim Empfang des Lesebestätigungs-Signals, wobei die Pixel (p_{i,j}) in einer Vielzahl von benachbarten Pixelblöcken verteilt sind; und
für jeden Block wenigstens eine dritte Steuerschaltung (503), die geeignet ist während einer Bilderfassungsphase, wenn ein erstes Pixel (p_{i,j}) des Blocks ein Lesebestätigungssignal erhält, die Übertragung der Adressleseanfrage-Signale in allen Pixeln in dem Block für eine Inhibitionsperiode zu blockieren.

2. Sensor nach Anspruch 1, wobei die Pixel (p_{i,j}) in einer Reihen- und Spaltenanordnung angeordnet sind, die Anordnung in eine Vielzahl von Blöcken benachbarter Pixel aufgeteilt ist, und wobei für jeden Block, die dritte Steuerschaltung (503) des Blocks verbunden ist mit den zweiten Schaltungen (501) der verschiedenen Pixel in dem Block.

3. Sensor nach Anspruch 2, wobei in jedem Block benachbarter Pixel die dritte Steuerschaltung (503) geeignet ist, während einer Bilderfassungsphase, wenn ein erstes Pixel (p_{i,j}) in dem Block ein Lesebestätigungs-Signal erhält, die Übertragung des Adressleseanfrage-Signals in allen Pixeln in dem Block für eine vorbestimmte Inhibitionsperiode (Tᵢₙₕ) zu blockieren.

4. Sensor nach Anspruch 3, wobei die Pixel des Blocks, die während der Inhibitionsperiode (Tᵢₙₕ) einschalten, deaktiviert werden ohne von der ersten Steuerschaltung (103) ausgelesen zu werden.

5. Sensor nach Anspruch 4, wobei der Wert des ersten Pixels in dem Block, der bestätigt werden muss, den Blockpixeln zugewiesen wird, welche während der Inhibitionsperiode (Tᵢₙₕ) deaktiviert wurden.

6. Sensor nach einem der Ansprüche 3 bis 5, wobei am Ende der Inhibitionsperiode (Tᵢₙₕ) für die Blockpixel, die noch nicht eingeschaltet wurden, die Übertragung der Adressleseanfrage entriegelt wird.

7. Sensor nach einem der Ansprüche 3 bis 6, wobei am Ende einer vorbestimmten Integrationsperiode (T_{img}) des Sensors, die Sensorpixel (p_{i,j}), welche nicht eingeschaltet wurden, in den An-Status gezwungen und von der ersten Steuerschaltung (103) ausgelesen werden.

8. Sensor nach Anspruch 7, wobei die Inhibitionsperiode (Tᵢₙₕ) eine Dauer im Bereich von 10⁻⁶⁻mal bis 10⁻¹⁻mal der Integrationsperiode (T_{img}) besitzt.

9. Sensor nach einem der Ansprüche 1 bis 8, wobei in jedem Block benachbarter Pixel der dritte Steuerschaltung geeignet ist, ein binäres Signal (SAB) zu liefern, das anzeigt, ob alle Blockpixel an sind.

10. Sensor nach Anspruch 9, wobei die Pixelanordnung (p_{i,j}) in Makroblöcke geteilt ist, wobei jeder eine Vielzahl von benachbarten Blöcken aufweist, und wobei in jedem Makroblock eine vierte Steuerschaltung (701) ein binäres Ausgangssignal (SAMB) liefert, das anzeigt, ob alle Pixel in dem Makroblock eingeschaltet sind.

11. Sensor nach Anspruch 10, wobei, wenn alle Pixel des Makroblocks eingeschaltet sind und ein erstes Pixel in dem Makroblock von der ersten Steuerschaltung (103) ausgelesen wurde, der Makroblock deaktiviert wird ohne dass die anderen Pixel in dem Makroblock ausgelesen werden.

12. Sensor nach Anspruch 11, wobei der Wert des ersten Pixels in dem Makroblock (p_{i,j}), der ausgelesen wurde, allen Pixeln in dem Makroblock zugewiesen wird.

## Claims

1. An image sensor comprising:
a first control circuit (103);
a plurality of pixels (P_{i,j}), each comprising a photodetector (PS), a comparator (303) of the level of an output signal of the photodetector (PS) with a reference value, and a second control circuit (501) connected to the first control circuit (103), the second circuit (501) being capable of sending a signal of address reading request to the first circuit (103) when the pixel turns on, that is, when the level of the output signal of its photodetector (PS) reaches the reference value, of receiving an address reading acknowledgement signal transmitted by the first circuit (103), and of deactivating the pixel on reception of the reading acknowledgement signal, the pixels (P_{i,j}) being distributed in a plurality of adjacent pixels blocks; and
for each block, at least one third control circuit (503) capable, during an image acquisition phase, when a first pixel (P_{i,j}) of the block receives a reading acknowledgement signal, of blocking the transmission of signals of address reading request in all the pixels in the block for an inhibition period.

2. The sensor of claim 1, wherein the pixels (P_{i,j}) are arranged in an array of rows and columns, the array being divided into said plurality of blocks of adjacent pixels, and wherein, for each block, the third control circuit (503) of the block is connected to the second circuits (501) of the different pixels in the block.

3. The sensor of claim 2, wherein in each block of adjacent pixels, the third control circuit (503) is capable, during an image acquisition phase, when a first pixel (P_{i,j}) in the block receives a reading acknowledgement signal, of blocking the transmission of signals of address reading request in all the pixels in the block for a predetermined inhibition period (Tᵢₙₕ).

4. The sensor of claim 3, wherein the pixels of the block which turn on during the inhibition period (Tᵢₙₕ) are deactivated without being read by the first control circuit (103).

5. The sensor of claim 4, wherein the value of the first pixel in the block to have been acknowledged is assigned to the block pixels which have been deactivated during the inhibition period (Tᵢₙₕ).

6. The sensor of any of claims 3 to 5, wherein at the end of the inhibition period (Tᵢₙₕ), for the block pixels which have not turned on yet, the transmission of address reading requests is unlocked.

7. The sensor of any of claims 3 to 6, wherein, at the end of a predetermined integration period (T_{img}) of the sensor, the sensor pixels (P_{i,j}) which have not turned on are forced to the on state, and are read by the first control circuit (103).

8. The sensor of claim 7, wherein the inhibition period (Tᵢₙₕ) has a duration in the range from 10⁻⁶ times to 10⁻¹ times the sensor integration period (T_{img}).

9. The sensor of any of claims 1 to 8, wherein, in each block of adjacent pixels, the third control circuit is capable of delivering a binary signal (SAB) indicating whether all the block pixels are on.

10. The sensor of claim 9, wherein the pixel array (P_{i,j}) is divided into macroblocks, each comprising a plurality of adjacent blocks, and wherein, in each macroblock, a fourth control circuit (701) delivers a binary output signal (SAMB) indicating whether all the pixels in the macroblock are on.

11. The sensor of claim 10, wherein, when all the pixels of a macroblock are on and a first pixel in the macro-block has been read by the first control circuit (103), the macroblock is deactivated without for the other pixels in the macroblock to be read.

12. The sensor of claim 11, wherein the value of the first pixel in the macroblock (P_{i,j}) to have been read is assigned to all the pixels in the macroblock.
